# EUROPÄISCHE PATENTSCHRIFT

(11) **EP 2 329 981 B1**
(45) Veröffentlichungstag und Bekanntmachung des Hinweises auf die Patenterteilung: **24.10.2012**
(21) Anmeldenummer: 10192404.1
(22) Anmeldetag: 24.11.2010
(51) Int. Cl.: B60K 5/08, A01D 69/00, B60W 10/06

(54) **Antriebsanordnung und Verfahren für eine Arbeitsmaschine mit zwei Verbrennungsmotoren**
Drive assembly and method for a work machine with two combustion engines
Agencement d'entraînement et procédé pour une machine de travail dotée de deux moteurs à combustion

(30) Priorität: 01.12.2009 DE 102009047343
(43) Veröffentlichungstag der Anmeldung: 08.06.2011
(73) Patentinhaber: DEERE & COMPANY, Moline, Illinois 61265-8098 (US)
(72) Erfinder: Jueptner, Detlef, 66271, Kleinblittersdorf (DE)
(74) Vertreter: Holst, Sönke

(56) Entgegenhaltungen:
- EP-A1- 1 731 345
- EP-A1- 1 818 524
- AU-A- 6 163 380
- DE-A1-102008 009 447
- US-A1- 2009 242 301

## Beschreibung

Die Erfindung betrifft eine Antriebsanordnung für eine Arbeitsmaschine mit einem ersten Verbrennungsmotor, einem zweiten Verbrennungsmotor, einer den Verbrennungsmotoren zugeordneten Steuerung und einem mit beiden Verbrennungsmotoren verbindbaren Antriebsstrang zum Antrieb von Elementen der Arbeitsmaschine und ein zugehöriges Verfahren.

### Stand der Technik

Selbstfahrende landwirtschaftliche Erntemaschinen werden in der jüngeren Vergangenheit mit immer leistungsstärkeren Verbrennungsmotoren ausgestattet, die bei Feldhäckslern derzeit bis über 800 kW abgeben können. Wegen der relativ geringen Stückzahlen, in denen derart leistungsstarke Motoren gefertigt werden, sind diese Motoren relativ preisaufwändig und in der Regel teurer als zwei Verbrennungsmotoren mit jeweils der halben Leistung. Weiterhin wird die gesamte Leistung des Motors nicht immer benötigt, - so ist sie beispielsweise beim Transport auf einer Straße oder bei der Grasernte in der Regel nicht erforderlich - was zu einem schlechteren Wirkungsgrad des Motors als im Volllastbetrieb führt, weshalb vorgeschlagen wurde (EP 1 640 201 A1), eine selbstfahrende Erntemaschine mit zwei Verbrennungsmotoren auszustatten, von denen einer zur Bewältigung größerer Leistungsanforderungen dem anderen Verbrennungsmotor zuschaltbar ist. Der erste Verbrennungsmotor ist demnach stets im Betrieb, wenn die Erntemaschine arbeitet, während der zweite Verbrennungsmotor nur bei Bedarf zugeschaltet wird. Im Einzelmotorbetrieb steht die Leistung eines einzelnen Verbrennungsmotors zur Verfügung, und im Doppelmotorbetrieb die Leistungen beider Verbrennungsmotoren, d. h. eine verdoppelte Leistung. Die von den einzelnen Verbrennungsmotoren maximal bereitstellbare Leistung ist in beiden Betriebsarten gleich. Ähnliche Anordnungen werden auch bei Flugzeugen (DE 69 49 295 U1) und Bussen (DE 37 41 891 A1) verwendet. Im Markt sind die erwähnten Erntemaschinen auch mit Verbrennungsmotoren unterschiedlicher Leistung verfügbar, wobei der erste Verbrennungsmotor die größere Leistung aufweist.

Es gibt gewisse Betriebsbedingungen, in denen die Leistung eines einzelnen Verbrennungsmotors nicht ausreicht, beispielsweise bei der Ernte eines relativ dünnen Bestands oder bei einer Transportfahrt mit einem gezogenen Erntevorsatz, wenn ein steiler Anstieg zu erklimmen ist. Man könnte zwar die Arbeitsmaschine mit einem oder zwei Verbrennungsmotoren größerer Leistung ausstatten, was dann aber beim Doppelmotorbetrieb wieder zur Folge hat, dass auch die übrigen Komponenten der Arbeitsmaschine, bei einer Erntemaschine beispielsweise der Antriebsstrang zum Antrieb von Erntegutbearbeitungseinrichtungen und letztere selbst größer auszulegen wären. Diese Maßnahme ist jedoch in vielen Fällen aus Kosten- und/oder Gewichtsgründen unerwünscht. Die bekannte Lösung mit einem größeren Hauptmotor und einem zuschaltbaren, kleineren Nebenmotor ist insofern nachteilig, als der Hauptmotor einem wesentlich größeren Verschleiß unterliegt.

Eine Einrichtung nach dem Oberbegriff des Anspruchs 1 ist aus der DE 102008009447 bekannt.

### Aufgabe der Erfindung

Die der Erfindung zu Grunde liegende Aufgabe wird darin gesehen, eine zwei Verbrennungsmotore umfassende Antriebsanordnung für eine Arbeitsmaschine dahingehend weiterzubilden, dass im Einzelmotorenbetrieb eine für viele Anwendungsfälle hinreichende Leistung bereitgestellt wird, im Doppelmotorbetrieb jedoch obere Leistungsgrenzen eingehalten werden.

### Lösung der Aufgabe

Diese Aufgabe wird erfindungsgemäß durch die Lehre der Patentansprüche 1 und 4 gelöst, wobei in den weiteren Patentansprüchen Merkmale aufgeführt sind, die die Lösung in vorteilhafter Weise weiterentwickeln.

Eine Antriebsanordnung für eine Arbeitsmaschine umfasst einen ersten Verbrennungsmotor, einen zweiten Verbrennungsmotor, eine den Verbrennungsmotoren zugeordnete Steuerung und einen mit beiden Verbrennungsmotoren verbindbaren Antriebsstrang zum Antrieb von Elementen der Arbeitsmaschine. Die Steuerung gibt im Doppelmotorbetrieb eine maximale Einzelleistung der Verbrennungsmotoren vor, die kleiner als die von der Steuerung vorgegebene, maximale Leistung eines im Einzelmotorbetrieb betriebenen Verbrennungsmotors ist. Bei einer Ausführungsform kann die maximale Leistung eines Verbrennungsmotors im Einzelmotorbetrieb beispielsweise 500 kW sein, während sie im Doppelmotorbetrieb nur 400 kW beträgt. Im Doppelmotorbetrieb stehen demnach insgesamt maximal 800 kW zur Verfügung.

Auf diese Weise erreicht man, dass die Leistung im Doppelmotorbetrieb nach oben hin auf einen Wert begrenzt wird, der unterhalb der Summe der maximalen Einzelleistungen der Verbrennungsmotoren im Einzelmotorbetrieb liegt. Dadurch sind der Antriebsstrang der Arbeitsmaschine und ihre angetriebenen Elemente nur auf diese reduzierte Leistung auszulegen. Beim Einzelmotorbetrieb steht hingegen eine für viele (und mehr als im Stand der Technik) Anwendungsfälle ausreichende Leistung zur Verfügung.

Vorzugsweise können beide Verbrennungsmotoren wahlweise im Einzelmotorbetrieb verwendet werden, um den Verschleiß möglichst gleichmäßig auf sie verteilen zu können. Dazu sind sie jeweils mittels einer trennbaren Kupplung mit dem Antriebsstrang verbunden. Es ist aber auch eine Anordnung mit einem permanent laufenden ersten Verbrennungsmotor und einem dem Antriebsstrang zuschaltbaren, zweiten Verbrennungsmotor möglich.

Die Erfindung ist an beliebigen Arbeitsmaschinen verwendbar, beispielsweise Baumaschinen, wie Baggern oder Radladern, landwirtschaftlichen Traktoren oder Erntemaschinen, insbesondere Mähdreschern, Feldhäckslern oder Baumwollerntern.

### Ausführungsbeispiel

Anhand der Abbildungen wird ein Ausführungsbeispiel der Erfindung erläutert. Es zeigen:
- Fig. 1: eine schematische seitliche Ansicht einer Arbeitsmaschine in Form eines Feldhäckslers,
- Fig. 2: eine schematische Draufsicht auf die Antriebsanordnung der Arbeitsmaschine, und
- Fig. 3: ein Flussdiagramm, nach dem die Steuerung die Verbrennungsmotoren kontrolliert.

In der Figur 1 ist eine Arbeitsmaschine 10 in der Art eines selbstfahrenden Feldhäckslers in schematischer Seitenansicht dargestellt. Die Arbeitsmaschine 10 baut sich auf einem Rahmen 12 auf, der von vorderen angetriebenen Rädern 14 und lenkbaren rückwärtigen Rädern 16 getragen wird. Die Bedienung der Arbeitsmaschine 10 erfolgt von einer Fahrerkabine 18 aus, von der aus ein Erntevorsatz 20 in Form eines Aufnehmers einsehbar ist. Mittels des Erntevorsatzes 20 vom Boden aufgenommenes Erntegut, z. B. Gras oder dergleichen wird über einen Einzugsförderer 22 mit Vorpresswalzen, die innerhalb eines Einzugsgehäuses 24 an der Frontseite der Arbeitsmaschine 10 angeordnet sind, einer unterhalb der Fahrerkabine 18 angeordneten Häckseltrommel 26 zugeführt, die es in kleine Stücke häckselt und es einer Fördervorrichtung 28 aufgibt. Das Gut verlässt die Arbeitsmaschine 10 zu einem nebenher fahrenden Transportfahrzeug über einen um eine etwa vertikale Achse drehbaren und in der Neigung verstellbaren Austragschacht 30. Im Folgenden beziehen sich Richtungsangaben, wie seitlich, unten und oben, auf die Vorwärtsbewegungsrichtung V der Arbeitsmaschine 10, die in der Figur 1 nach rechts verläuft.

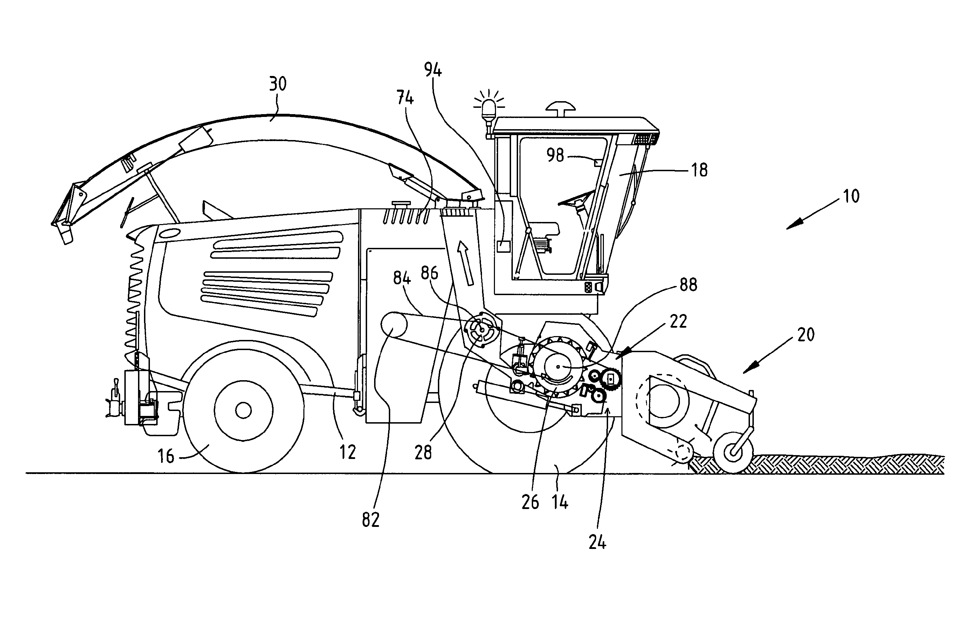

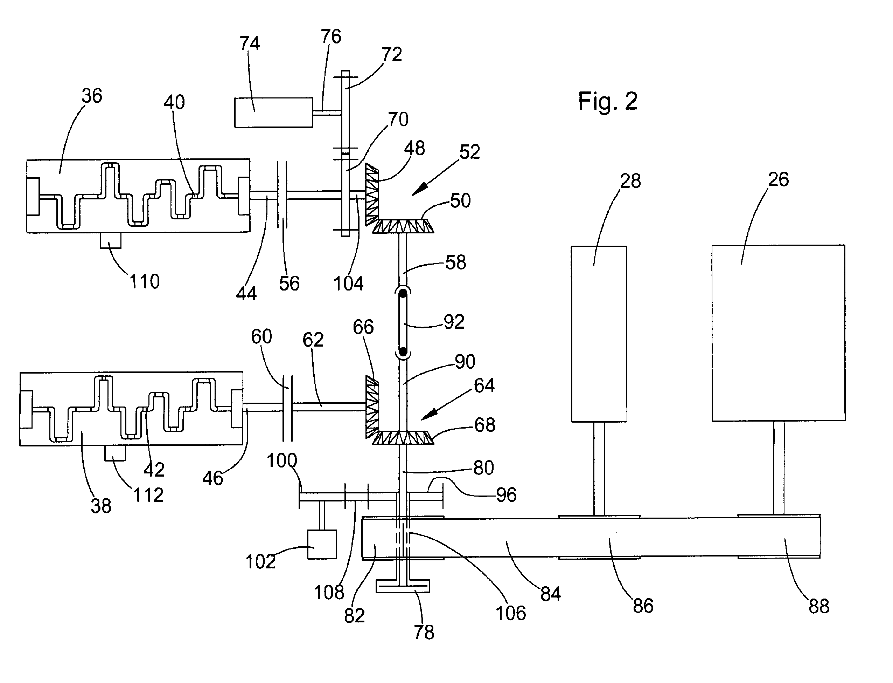

Die Figur 2 zeigt eine Draufsicht auf die Antriebsanordnung der Arbeitsmaschine 10. Im rückwärtigen Bereich der Arbeitsmaschine 10 befinden sich zwei rückwärtig der Hinterachse angeordnete (erste und zweite) Verbrennungsmotoren 36, 38 insbesondere in Form von Dieselmotoren, die seitlich nebeneinander angeordnet sind. Die maximalen Leistungen der Verbrennungsmotoren 36, 38 sind vorzugsweise identisch, obwohl auch Verbrennungsmotoren 36, 38 unterschiedlicher Leistung verwendbar wären. Die Verbrennungsmotoren 36, 38 erstrecken sich in der Vorwärtsrichtung der Arbeitsmaschine 10 bis etwa zum rückwärtigen Ende des Rahmens 12 und umfassen (erste und zweite) Kurbelwellen 40, 42, die sich nach vorn aus den Gehäusen der Verbrennungsmotoren 36, 38 heraus erstrecken. Die Kurbelwellen 40, 42 treiben jeweils eine sich horizontal und nach vorn erstreckende (erste und zweite) Längswelle 44, 46 an.

Der erste Verbrennungsmotor 36 treibt im Betrieb mit seiner Kurbelwelle 40 eine erste Längswelle 44 an, die mit der Eingangsseite einer ersten Kupplung 56 verbunden ist. Die Ausgangsseite der ersten Kupplung 56 ist über eine vierte Längswelle 104 mit einem ersten Kegelzahnrad 48 eines ersten Winkelgetriebes 52 verbunden. Die vierte Längswelle 104 treibt auch über Zahnräder 70, 72 und eine fünfte Längswelle 76 ein Pumpenaggregat 74 an, das eine Hydropumpe zum Antrieb von Hydromotoren für den Vortrieb der Erntemaschine, eine Lenkpumpe, eine Hydropumpe zum Antrieb von Hydromotoren für den Erntevorsatz 22 und eine Hydropumpe zur Ölversorgung der Steuerung des hydrostatischen Antriebs für den Vortrieb der Arbeitsmaschine 10 umfasst. Es wäre auch denkbar, über eines der Zahnräder 70, 72 oder ein dazwischen angeordnetes Zahnrad (nicht gezeigt) weitere permanent angetriebene Elemente, wie einen elektrischen Generator und/oder einen Gebläseantrieb für die Kühlluftzufuhr für die Verbrennungsmotoren 36, 38 anzutreiben.

Das zweite Kegelzahnrad 50 des ersten Winkelgetriebes 52 ist mit einem ersten Abschnitt 58 einer Querwelle 58, 80, 90 verbunden, der wiederum über eine Gelenkwelle 92 mit einem zweiten Abschnitt 90 der Querwelle 58, 80, 90 verbunden ist, der sich bis zu einem zweiten Kegelzahnrad 68 des eines zweiten Winkelgetriebes 64 erstreckt. Der zweite Verbrennungsmotor 38 treibt im Betrieb mit seiner Kurbelwelle 42 eine zweite Längswelle 46 an, die mit der Eingangsseite einer zweiten Kupplung 60 verbunden ist. Die Ausgangsseite der zweiten Kupplung 60 ist über eine dritte Längswelle 62 mit dem ersten Kegelzahnrad 66 des zweiten Winkelgetriebes 64 verbunden.

Die Verbrennungsmotoren 36, 38 sind getrennt voneinander am Rahmen 12 oder einem Hilfsrahmen befestigt, in der Regel über Dämpfungselemente. An ihren Gehäusen sind auch die zugehörigen Kupplungen 56 bzw. 60 und Winkelgetriebe 52, 64 befestigt. Die Gelenkwelle 92 ermöglicht den Ausgleich von möglichen Toleranzen der Positionen der Verbrennungsmotoren 36, 38 und der Winkelgetriebe 52, 64.

Der zweite Abschnitt 90 der Querwelle 58, 80, 90 und das zweite Kegelzahnrad 68 des zweiten Winkelgetriebes 64 sind mit einem äußeren Abschnitt 80 der Querwelle 58, 80, 90 verbunden, der sich durch eine mit der Riemenscheibe 82 verbundene Hohlwelle 106 hindurch auf die von den Winkelgetrieben 52, 64 abgewandte Seite der Riemenscheibe 82 erstreckt und dort mit einer dritten Kupplung 78 verbunden ist. Die Riemenscheibe 82 wird von einem Treibriemen 84 umschlungen, der auch eine Riemenscheibe 86 für den Antrieb der Fördereinrichtung 28 und eine Riemenscheibe 88 zum Antrieb der Häckseltrommel 26 umschlingt. Anstelle der oder zusätzlich zur dritten Kupplung 78 kann der Antriebsstrang der Häckseltrommel 26 und der Fördervorrichtung 28 durch einen Mechanismus zum Spannen und Lösen des Treibriemens 84 in Bewegung versetzt oder angehalten werden. Die dritte Kupplung 78 ist ausgangsseitig mit der Hohlwelle 106 verbunden, die außerdem auf der den Winkelgetrieben 52, 64 zugewandten Seite der Riemenscheibe 82 über Zahnräder 96, 108 und 100 eine Hydropumpe 102 antreibt, die zum Antrieb eines Hydromotors (nicht gezeigt) zum Antrieb des Einzugsförderers 22 dient. Die dritte Kupplung 78 ermöglicht es, den Treibriemen 84 und mit ihm die Häckseltrommel 26 und die Fördervorrichtung 28 ein- und auszuschalten. Die Zahnräder 96, 108 und 100 können innerhalb eines Gehäuses angebracht werden, das am Gehäuse des zweiten Winkelgetriebes 64 befestigt ist. Die Zahnräder 70 und 72 sind hingegen vorzugsweise innerhalb des Gehäuses des ersten Winkelgetriebes 52 und der ersten Kupplung 56 integriert.

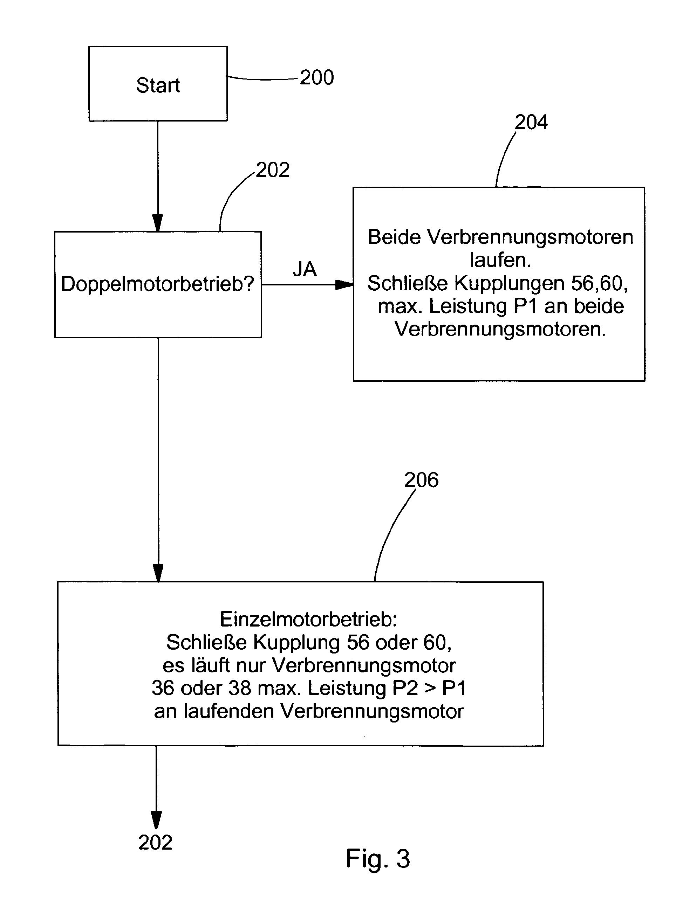

Eine geeignete Steuerung 94 (s. Figur 1) dient bei beiden Ausführungsformen zum Zuschalten und Abtrennen der Verbrennungsmotoren 36, 38 vom Antriebsstrang. Die Steuerung 94 ist mit den Kupplungen 56, 60 und 78 und mit Motorsteuerungen 110, 112 der Verbrennungsmotoren 36 und 38 verbunden. Es sind neben dem Stillstand der Verbrennungsmotoren 36, 38 drei Betriebsarten möglich, wie im Folgenden anhand des in der Figur 3 dargestellten Flussdiagramms dargestellt wird. Nach dem Start im Schritt 200 wird im Schritt 202 abgefragt, ob ein Doppelmotorbetrieb erforderlich oder gewünscht ist. Dieser wird bei größeren Leistungsanforderungen, beispielsweise bei der Maisernte mit einem anstelle des Aufnehmers 20 montierten Mähvorsatz (nicht gezeigt) ausgewählt und es folgt der Schritt 204, gemäß dem beide Verbrennungsmotoren 36, 38 laufen, und die Kupplungen 56 und 60 sind geschlossen. Die dritte Kupplung 78 dient in an sich bekannter Weise dazu, die Fördereinrichtung 28 und die Häckseltrommel 26 bei Bedarf ein- und auszuschalten, wozu eine geeignete Schnittstelle 98 (z. B. Schalter) mit der Steuerung 94 verbunden ist. Außerdem weist die Steuerung 94 die Motorsteuerungen 110, 112 an, die Verbrennungsmotoren 36 und 38 jeweils mit einer maximalen Leistung P₁ laufen zu lassen. Falls die beiden Verbrennungsmotoren 36, 38 gleichartig und gleicher maximaler Leistung sind, ist die an sie kommandierte, maximale Leistung P₁ jeweils gleich groß. Wenn sie unterschiedlich sind, können unterschiedliche maximale Leistungen P₁ an sie kommandiert werden.

Bei geringeren Leistungsanforderungen, z. B. bei der Ernte eines Schwads mittels des in Figur 1 dargestellten Aufnehmers 20 oder bei einer Straßenfahrt oder wenn bei der Maisernte nur einzelne Reihen am Feldrand zu ernten sind, wird im Schritt 206, der auf den Schritt 202 folgt, wenn kein Doppelmotorbetrieb vorgesehen ist, nur einer der Verbrennungsmotoren 36 oder 38 benötigt, während der jeweils andere Verbrennungsmotor 38 oder 36 in den Stillstand versetzt wird. Die dem jeweils nicht benötigten Verbrennungsmotor 38 oder 36 zugeordnete Kupplung 60 oder 56 wird dann geöffnet, während die andere Kupplung 56 oder 60 geschlossen ist und auch das Pumpenaggregat 74 antreibt. Außerdem weist die Steuerung 94 die Motorsteuerung 110 oder 112 des jeweils im Betrieb befindlichen Verbrennungsmotors 36 oder 38 an, den laufenden Verbrennungsmotoren 36 oder 38 jeweils mit einer maximalen Leistung P₂ laufen zu lassen. Die maximale Leistung P₂ im Schritt 206 ist größer als die maximale Leistung P₁ im Schritt 204. Falls die beiden Verbrennungsmotoren 36, 38 gleichartig und gleicher maximaler Leistung sind, ist die an sie kommandierte, maximale Leistung P₂ jeweils gleich groß. Wenn sie unterschiedlich sind, können unterschiedliche maximale Leistungen P₂ an sie kommandiert werden.

Es folgt anschließend wieder der Schritt 202. Wenn demnach später wieder beide Verbrennungsmotoren 36 und 38 benötigt werden, wird der stehende Verbrennungsmotor 38 oder 36 angelassen, auf die Drehzahl des laufenden Verbrennungsmotors 36 oder 38 gebracht und die zugehörige Kupplung 60 oder 56 geschlossen. Es wäre auch möglich, zum Anlassen des stehenden Verbrennungsmotors 38 oder 36 die zugehörige Kupplung 60 oder 56 zu schließen und ihn damit zu starten.

Das Zuschalten oder Abschalten eines Verbrennungsmotors 36 oder 38 zum oder vom Antriebsstrang kann durch eine Bedienereingabe mittels der Schnittstelle 98 oder selbsttätig durch die Steuerung 94 erfolgen, z. B. auf einer Lasterfassung der Verbrennungsmotoren 36 und/oder 38 (beispielsweise anhand seiner Drehzahl) oder auf einem Drehmomentsensor im Antriebsstrang basierend. Es wäre auch denkbar, durch die Steuerung 94 einen der Verbrennungsmotoren 36, 38 selbsttätig abzuschalten, wenn sich ein Straßen/Feldbetriebsschalter der Schnittstelle 98 in der Straßenbetriebsstellung befindet, und ihn selbsttätig zuzuschalten, wenn sich der Straßen/Feldbetriebsschalter in der Feldbetriebsstellung befindet und eine selbsttätige Erntevorsatzerkennung (s. EP 0 377 163 A oder DE 199 49 994 A) signalisiert, dass ein Maiserntevorsatz montiert ist, während einer der Verbrennungsmotoren 36, 38 bei Erkennung eines Erntevorsatzes 20 in Form eines Aufnehmers (wie in der Figur 1 gezeigt) stets ausgeschaltet bleibt. Die Steuerung 94 verwendet im Einzelmotorenbetrieb beide Verbrennungsmotoren 36, 38 wechselweise (insbesondere anhand ihrer Betriebsstunden oder des verbrauchten Kraftstoffs oder der abgegebenen kWh), um ihre Abnutzung etwa gleich zu halten.

Die maximal von den Verbrennungsmotoren 38, 38 abzugebende Leistung ist im Doppelmotorbetrieb kleiner als im Einzelmotorbetrieb. Dadurch steht im Einzelmotorbetrieb bei gleichartigen Verbrennungsmotoren 36, 38 mehr als die Hälfte der maximalen Gesamtleistung zur Verfügung, was die Anzahl der Tätigkeiten, die im Einzelmotorbetrieb abgeleistet werden können, vergrößert, aber eine Anpassung des Antriebsstrangs an eine größere maximale Leistung im Doppelmotorbetrieb erübrigt.

## Patentansprüche

1. Antriebsanordnung für eine Arbeitsmaschine (10), mit einem ersten Verbrennungsmotor (36), einem zweiten Verbrennungsmotor (38), einer den Verbrennungsmotoren (36, 38) zugeordneten Steuerung (94) und einem mit beiden Verbrennungsmotoren (36, 38) verbindbaren Antriebsstrang zum Antrieb von Elementen der Arbeitsmaschine (10), **dadurch gekennzeichnet, dass** die Steuerung eingerichtet ist, bei einem Doppelmotorbetrieb eine maximale Einzelleistung (P₁) der Verbrennungsmotoren (36, 38) vorzugeben, die kleiner als die von der Steuerung (94) vorgebbare, maximale Leistung (P₂) eines im Einzelmotorbetrieb betriebenen Verbrennungsmotors (36, 38) ist.

2. Antriebsanordnung nach Anspruch 1, **dadurch gekennzeichnet, dass** beide Verbrennungsmotoren (36, 38) durch ihnen jeweils zugeordnete Kupplungen (56, 60) mit dem Antriebsstrang verbindbar sind.

3. Arbeitsmaschine (10), insbesondere selbstfahrende Erntemaschine mit einer Antriebsanordnung nach Anspruch 1 oder 2.

4. Verfahren zum Betrieb einer Antriebsanordnung für eine Arbeitsmaschine (10), wobei die Antriebsanordnung einen ersten Verbrennungsmotor (36), eine zweiten Verbrennungsmotor (38), eine den Verbrennungsmotoren (36, 38) zugeordnete Steuerung (94) und einen mit beiden Verbrennungsmotoren (36, 38) verbindbaren Antriebsstrang zum Antrieb von Elementen der Arbeitsmaschine (10) umfasst, **dadurch gekennzeichnet, dass** die Steuerung (94) bei einem Doppelmotorbetrieb eine maximale Einzelleistung (P₁) der Verbrennungsmotoren (36, 38) vorgibt, dass die Steuerung (94) bei einem Einzelmotorbetrieb eine maximale Einzelleistung (P₂) des jeweils laufenden Verbrennungsmotors (36, 38) vorgibt und dass die maximale Einzelleistung (P₁) im Doppelmotorbetrieb kleiner als die maximale Leistung (P₂) im Einzelmotorbetrieb ist.

## Claims

1. Drive assembly for a work machine (10), with a first combustion engine (36), with a second combustion engine (38), with a control (94) assigned to the combustion engines (36, 38) and with a drive train, connectable to both combustion engines (36, 38), for the drive of elements of the work machine (10), **characterized in that** the control is set up to stipulate, during double-engine operation, a maximum individual power (P₁) of the combustion engines (36, 38) which is lower than the maximum power (P₂), stipulatable by the control (94), of a combustion engine (36, 38) run in single-engine operation.

2. Drive assembly according to Claim 1, **characterized in that** the two combustion engines (36, 38) can be connected to the drive train by means of clutches (56, 60) assigned in each case to them.

3. Work machine (10), in particular self-propelled harvesting machine, with a drive assembly according to Claim 1 or 2.

4. Method for operating a drive assembly for a work machine (10), the drive assembly comprising a first combustion engine (36), a second combustion engine (38), a control (94) assigned to the combustion engines (36, 38), and a drive train, connectable to both combustion engines (36, 38), for the drive of elements of the work machine (10), **characterized in that** the control (94) stipulates, in double-engine operation, a maximum individual power (P₁) of the combustion engines (36, 38), **in that** the control (94) stipulates in single-engine operation a maximum individual power (P₂) of the in each case running combustion engine (36, 38), and **in that** the maximum individual power (P₁) in double-engine operation is lower than the maximum power (P₂) in single-engine operation.

## Revendications

1. Agencement d'entraînement pour une machine de travail (10), comprenant un premier moteur à combustion interne (36), un deuxième moteur à combustion interne (38), une commande (94) associée aux moteurs à combustion interne (36, 38) et une chaîne cinématique pouvant être connectée aux deux moteurs à combustion interne (36, 38) pour l'entraînement d'éléments de la machine de travail (10), **caractérisé en ce que** la commande est prévue pour prédéfinir une puissance individuelle maximale (P₁) des moteurs à combustion interne (36, 38) en mode de fonctionnement double des moteurs, laquelle puissance est inférieure à la puissance maximale (P₂), prédéfinissable par la commande (94), d'un moteur à combustion interne (36, 38) entraîné en mode de fonctionnement individuel des moteurs.

2. Agencement d'entraînement selon la revendication 1, **caractérisé en ce que** les deux moteurs à combustion interne (36,38) peuvent être connectés par leurs embrayages respectivement associés (56, 60) à la chaîne cinématique.

3. Machine de travail (10), en particulier machine de récolte à entraînement propre, comprenant un agencement d'entraînement selon la revendication 1 ou 2.

4. Procédé pour faire fonctionner un agencement d'entraînement pour une machine de travail (10), l'agencement d'entraînement comprenant un premier moteur à combustion interne (36), un deuxième moteur à combustion interne (38), une commande (94) associée aux moteurs à combustion interne (36, 38), et une chaîne cinématique pouvant être connectée aux deux moteurs à combustion interne (36, 38) pour l'entraînement d'éléments de la machine de travail (10), **caractérisé en ce que** la commande (94), en mode de fonctionnement double des moteurs, prédéfinit une puissance individuelle maximale (P₁) des moteurs à combustion interne (36, 38), **en ce que** la commande (94), en mode de fonctionnement individuel des moteurs, prédéfinit une puissance individuelle maximale (P₂) du moteur à combustion interne respectif (36, 38) entraîné et **en ce que** la puissance individuelle maximale (P₁) en mode de fonctionnement double des moteurs est inférieure à la puissance maximale (P₂) en mode de fonctionnement individuel des moteurs.
